# EUROPÄISCHE PATENTSCHRIFT

(11) **EP 2 188 325 B1**
(45) Veröffentlichungstag und Bekanntmachung des Hinweises auf die Patenterteilung: **16.02.2011**
(21) Anmeldenummer: 09780254.0
(22) Anmeldetag: 07.07.2009
(51) Int. Cl.: C08J 3/24, C08L 23/16

(54) **VERFAHREN ZUR COMPOUNDIERUNG EINES KUNSTSTOFFMATERIALS, KUNSTSTOFFMATERIAL UND KUNSTSTOFFERZEUGNIS**
METHOD FOR COMPOUNDING A PLASTIC MATERIAL, PLASTIC MATERIAL AND PLASTIC PRODUCT
PROCÉDÉ DE COMPOUNDAGE D'UNE MATIÈRE PLASTIQUE, MATIÈRE PLASTIQUE ET ARTICLE EN PLASTIQUE

(30) Priorität: 11.07.2008 DE 102008033290
(43) Veröffentlichungstag der Anmeldung: 26.05.2010
(73) Patentinhaber: Takata-Petri AG, 63743 Aschaffenburg (DE)
(72) Erfinder: VAETH, Norbert, 97839 Esselbach (DE)
(74) Vertreter: Baumgärtel, Gunnar
(86) Internationale Anmeldenummer: PCT/EP2009/058599
(87) Internationale Veröffentlichungsnummer: WO 2010/003950

(56) Entgegenhaltungen:
- EP-A1- 0 872 517
- WO-A1-98/54260
- WO-A1-02/102880
- WO-A1-2006/070179
- DE-A1-102006 033 897
- US-A- 6 063 867
- US-A1- 2007 077 375

## Beschreibung

Die Erfindung betrifft ein Verfahren zur Compoundierung eines Kunststoffmaterials gemäß dem Oberbegriff des Anspruchs 1, ein Kunststoffmaterial nach dem Oberbegriff des Anspruchs 9, das mittels dieses Verfahrens herstellbar ist, und ein Kunststofferzeugnis gemäß dem Oberbegriff des Anspruchs 15, das aus diesem Kunststoffmaterial hergestellt ist.

Aus der DE 10 2006 033 897 A1 ist ein thermoplastisches Elastomer bekannt, das aus einem Propylen-Copolymer aus Propylen und mindestens einem weiteren Alken, einem Ethylen-Copolymer aus Ethylen und mindestens einem weiteren Alken, einem Ethylen-Propylen-Dien-Kautschuk und einem Füllstoff zur Modifikation oberflächenbildender Eigenschaften des thermoplastischen Elastomers besteht. Dabei werden zur Herstellung dieses thermoplastischen Elastomers sämtliche Inhaltsstoffe mit einem Vernetzer vermischt und gemeinsam miteinander vernetzt.

Aus der WO 2006/070179 A1 ist ebenfalls ein thermoplastisches Elastomer bekannt, das aus einem propylenischen Olefinpolymer, einem ethylenischen Polymer, einem Vernetzer, einem Erzeuger freier Radikale und optional einem Polyethylen hoher Dichte hergestellt wird. Dabei werden wiederum alle Inhaltsstoffe miteinander vermischt und miteinander vernetzt.

Die physikalischen Eigenschaften von Kunststoffen sind stark von der Temperatur abhängig. So lassen sich diese Eigenschaften bei niedrigen Temperaturen, also bei Temperaturen unterhalb von -30 °C, insbesondere unterhalb von -32,5 °C, unterhalb von -35 °C und ganz insbesondere bei Temperaturen von -37,5 °C oder darunter, nicht mit denen bei Raumtemperatur oder noch höheren Temperaturen vergleichen. Auch kann aus den physikalischen Eigenschaften, die standardmäßig bei hohen Temperaturen wie beispielsweise 140 °C oder 230 °C gemessen werden, nicht zwingenderweise auf die Eigenschaften der Kunststoffe bei niedrigen Temperaturen geschlossen werden.

Die Eigenschaften eines Kunststoffs bei niedrigen Temperaturen haben beispielsweise dann einen entscheidenden Einfluss auf die Verwendbarkeit des Kunststoffs, wenn er als Material für eine Abdeckung bzw. ein Gehäuse eines Airbags für ein Kraftfahrzeug eingesetzt werden soll. Es muss dabei gewährleistet werden, dass ein solchermaßen verwendeter Kunststoff auch bei niedrigen Temperaturen ein reproduzierbares Aufreißverhalten zeigt und dass gleichzeitig die Entstehung loser Kunststoffpartikel vermieden wird.

Als Aufreißverhalten soll hier - im Falle der Verwendung eines Kunststoffs zur Herstellung einer Abdeckung eines Airbags - das Verhalten des Kunststoffs verstanden werden, das dieser dann zeigt, wenn er beispielsweise durch die Entfaltung eines Airbags (Airbagauslösung) infolge eines Unfalls entlang einer Sollbruchstelle aufreißt. Ein solches Aufreißverhalten lässt sich auch auf andere Kunststofferzeugnisse und andere das Aufreißen auslösende Ereignisse übertragen.

Es hat sich gezeigt, dass Airbagabdeckungen oder Airbaggehäuse, die aus unterschiedlichen herkömmlichen Materialien wie beispielsweise thermoplastischen Elastomeren auf der Basis von Olefinen (TPO) bzw. auf der Basis von Olefinen, vernetztem Kautschuk und Styrol-Ethenbuten-Styrol (TPO/SEBS/TPV) hergestellt sind, bei -32,5 °C noch ein wünschenswertes Aufreißverhalten zeigen, bei -35 °C oder -37,5 °C jedoch nicht mehr. Ein nicht wünschenswertes Aufreißverhalten äußert sich beispielsweise dadurch, dass Airbagabdeckungen oder Gehäuse nicht mehr entlang einer Sollbruchstelle aufreißen, sondern unkontrolliert einreißen und sich darüber hinaus Teile des Materials beim Aufreißen bzw. Einreißen (beispielsweise infolge einer Airbagauslösung) von der Airbagabdeckung lösen.

Aber auch bei aus dem Stand der Technik bekannten Materialien, die ein wünschenswertes Aufreißen bei niedriger Temperatur gewährleisten, ergibt sich das Problem, dass deren Herstellung häufig nicht reproduzierbar erfolgen kann und aufwändig ist.

Die Aufgabe der vorliegenden Erfindung ist es, ein Verfahren bereitzustellen, das auf einfache Weise die reproduzierbare Herstellung eines Kunststoffmaterials erlaubt, das für den Einsatz als Airbagabdeckung geeignet ist und auch bei niedrigen Temperaturen ein vorteilhaftes Aufreißverhalten zeigt. Der Erfindung liegt ferner die Aufgabe zugrunde, ein entsprechendes Kunststoffmaterial bereitzustellen.

Diese Aufgabe wird mit einem Verfahren zur Compoundierung eines Kunststoffmaterials mit den Merkmalen des Anspruchs 1 gelöst.

Ein solches Verfahren zeichnet sich durch die nachfolgenden Schritte (in der angegebenen Reihefolge) aus: a) Bereitstellen mindestens eines ethylenischen Polymers, b) Zugabe mindestens eines Vernetzungsmittels zu dem ethylenischen Polymer, c) zumindest teilweises Vernetzen des ethylenischen Polymers mittels des Vernetzungsmittels, d) Zugabe mindestens eines propylenischen Polymers zu dem in Schritt c) erhaltenen Produkt und e) zumindest teilweises Vernetzen des propylenischen Polymers mit dem in Schritt c) erhaltenen Produkt.

Das heißt, bei diesem Verfahren erfolgen zunächst eine Vernetzung eines ethylenischen Polymers und anschließend eine Vernetzung eines propylenischen Polymers mit dem bereits vorvernetzten ethylenischen Polymer. Dadurch werden besonders vorteilhafte Eigenschaften des compoundierten Kunststoffs in Bezug auf die Aufreißeigenschaften einer Airbagabdeckung, die aus diesem Kunststoff hergestellt ist, erreicht. Mit anderen Worten wird durch eine zweistufige Vernetzungsreaktion zunächst eine Grundvernetzung des ethylenischen Polymers durchgeführt (erste Vernetzungsstufe) und anschließend der Grad der Vernetzung durch eine Vernetzung mit einem propylenischen Polymer justiert bzw. angepasst (zweite Vernetzungsstufe).

Der Begriff der Compoundierung ist dem auf dem Gebiet der Kunststofftechnik tätigen Fachmann hinlänglich bekannt und beschreibt einen Veredelungsprozess von Kunststoffen durch Beimischung von Zuschlagstoffen zur gezielten Optimierung der Eigenschaftsprofile der Kunststoffe. Zuschlagstoffe im Sinne der Erfindung sind beispielsweise Additive, Modifikatoren (Modifier) oder andere Kunststoffe. Im einfachsten Fall wird vorliegend ein ethylenisches Polymer mit einem propylenischen Polymer veredelt.

Bei dem Verfahren können beispielsweise 30 bis 50 %, insbesondere 35 bis 45 % und ganz besonders 37 bis 40 % des ethylenischen Polymers eingesetzt werden. Die Prozentangaben sind dabei hier und im Folgenden stets als Massenprozent zu verstehen, sofern sich nicht aus dem Zusammenhang (beispielsweise bei der Verwendung von Prozent als Maßeinheit für die Reiß- oder Bruchdehnung) etwas anderes ergibt oder explizit etwas anderes angegeben ist. Die Prozentangaben der einzusetzenden Bestandteile beziehen sich ferner jeweils auf die Gesamtmenge der verschiedenen zur Compoundierung eingesetzten Substanzen.

Bei dem Verfahren können ferner beispielsweise 49 bis 69 %, insbesondere 54 bis 64 % und ganz besonders 56 bis 59 % des propylenischen Polymers eingesetzt werden.

In einer Variante des Verfahrens wird als ethylenisches Polymer ein Ethylen-Propylen-DienKautschuk (EPDM) und/oder ein Copolymer aus Ethen und einem weiteren Alken verwendet. Wenn das weitere Alken Propen ist, muss das propylenische Polymer dabei eine vom ethylenischen Polymer verschiedene chemische Struktur aufweisen. Das heißt, das ethylenische Polymer und das propylenische Polymer dürfen nicht dieselben Substanzen sein. Octen ist besonders als weiteres Alken geeignet. Als Dienkomponente des EPDM kommen vorzugsweise unter anderem 1,4-Hexadien, Norbonen, Dicyclopentadien oder eine Mischung davon in Betracht. Andere Dienkomponenten sind aber ebenso denkbar, da sie die prinzipiellen Eigenschaften des Kunststoffs, dessen Bestandteil das EPDM ist, nur unwesentlich beeinflussen.

In einer alternativen Ausgestaltung wird als propylenisches Polymer ein Copolymer aus Propen und einem weiteren Alken verwendet. Das weitere Alken kann dabei auch grundsätzlich dann ein Ethen sein, wenn als ethylenisches Polymer ein Copolymer aus Ethen und Propen verwendet wird. Allerdings sind dann jeweils unterschiedliche Verhältnisse der Propen-Komponente und der Ethen-Komponente zueinander im ethylenischen Polymer und im propylenischen Polymer vorzusehen. Dabei würde das ethylenische Polymer in diesem Fall einen hohen Anteil von Etheneinheiten und einen geringeren Anteil von Propeneinheiten enthalten, während dieses Verhältnis beim propylenischen Polymer umgekehrt wäre.

Ein geeignetes propylenisches Polymer ist beispielsweise ein Polypropylen mit einer Massenfließrate von rund 15 g/10 min (gemessen bei 230 °C und einer Masse von 2,16 kg gemäß ISO 1133), einer Zugfestigkeit beim Bruch von 24 MPa (gemessen nach ISO 527-2), einer Streckdehnung von 6 % (gemessen nach ISO 527-2), einem Zugmodul von 1050 MPa (gemessen nach ISO 527-2), einem Elastizitätsmodul von 950 MPa (gemessen nach ISO 178), einer Kerbschlagzähigkeit von mehr als 50 bei 23 °C und von 8 bei -20 °C (jeweils gemessen nach ISO 180), einer Rockwell-Härte von 78 auf der R-Skala (gemessen nach ISO 2039-2), einem Schmelzpunkt von 165 °C (gemessen nach ISO 3146), einer Dichte von 0,905 g/cm³ und einer Schüttdichte von 0,525 g/cm³ (jeweils gemessen nach ISO 1183). Andere Polypropylene mit ähnlichen Eigenschaften sind ebenso geeignet.

In einer weiteren Variante weist das das Vernetzungsmittel ein Peroxid als Vernetzer auf. Eine peroxidkatalysierte Vernetzungsreaktion ist dem Fachmann bekannt und wird hier nicht im Detail beschrieben. Bei der Verwendung eines Peroxids als Vernetzer ergibt sich der weitere Effekt, dass das propylenische Polymer durch das Peroxid vor einer Vernetzung zumindest teilweise abgebaut (degradiert) wird. Dadurch wird das Molekulargewicht des eingesetzten propylenischen Polymers vor einer Vernetzung reduziert, so dass sich besonders vorteilhafte Eigenschaften des compoundierten Kunststoffmaterials ergeben.

In einer Variante des Verfahrens können beispielsweise 0,1 bis 0,3 %, insbesondere 0,1 bis 0,2 % Vernetzungsmittel eingesetzt werden. Dabei enthält das Vernetzungsmittel in einer Variante 100 % eines peroxidischen Vernetzers, der ca. 8 bis 12 %, insbesondere ca. 9 bis 10 %, aktives Peroxid enthält.

In einer alternativen Ausgestaltung ist das Peroxid in einem Polypropylen-Basisharz eingebettet. Dadurch lässt sich eine besonders gute Einmischung in die zu vernetzenden Komponenten erreichen.

In einer weiteren Variante enthält das Vernetzungsmittel neben dem eigentlichen Vernetzer noch einen Beschleuniger, der die Freisetzung der reaktiven Spezies aus dem Vernetzer beschleunigt und so für eine schnellere Polymerisation bzw. Vernetzung sorgt. Das Massenverhältnis von Vernetzer zu Beschleuniger kann dabei beispielsweise zwischen 1:1 und 4:1 betragen. Das heißt, der Beschleuniger kann beispielsweise einen Massenanteil von 0,05 % an der Gesamtmischung haben und der Vernetzer 0,2 %. Alternativ kann der Beschleuniger auch einen Anteil von 0,05, 0,1 oder 0,15 % haben und der Vernetzer einen Anteil von 0,05, 0,1, 0,15, 0,2 oder 0,25 % (insbesondere innerhalb der oben angegeben Verhältnisse).

In einer Ausgestaltung weist der Beschleuniger ein Triallylcyanurat auf. Beispielsweise kann ein Beschleuniger verwendet werden, der 70 % Triallylcyanurat enthält.

In einer Variante des Verfahrens wird dem zu compoundierenden Kunststoffmaterial in Schritt b) und/oder d) mindestens ein Additiv zugesetzt, das ausgewählt ist aus der Gruppe umfassend Antistatika, Antioxidantien, Polyethylen-Masterbatches und Füllstoffe. Grundsätzlich können auch andere Additive wie beispielsweise Flammschutzmittel eingesetzt werden. Für die Erzielung vorteilhafter Eigenschaften einer aus dem zu compoundieren Kunststoff hergestellten Airbagabdeckung in Bezug auf ein besonders günstiges Aufreißverhalten bei niedrigen Temperaturen sind derartige Füllstoffe jedoch nicht erforderlich.

Beispiele für geeignete Antistatika sind Glycerolmonostearat, ethoxylierte Amine und Alkansulfonate.

Beispiele für geeignete Antioxidantien sind dem Fachmann allgemein bekannte phenolische Antioxidationsmittel, insbesondere gehinderte Phenolderivate, die unter der Handelsbezeichnung Irganox vertrieben werden.

Ein Zusatz eines Antioxidans bzw. eines Antioxidationsmittels in dem zu compoundierenden Kunststoffmaterial spielt für die Oberflächenbeschaffenheit und das Aufreißverhalten bei tiefen Temperaturen einer Airbagabdeckung, die aus dem Kunststoff hergestellt ist, primär keine wesentliche Rolle. Durch den Zusatz eines Antioxidationsmittels werden Alterungsprozesse des Kunststoffs jedoch wesentlich verlangsamt, so dass eine Airbagabdeckung, die aus dem Kunststoff hergestellt ist, auch über einen Zeitraum von mehreren Jahren gleich bleibende Eigenschaften aufweist.

Ein Beispiel für einen geeigneten Polyethylen-Masterbatch ist ein einen schwarzen Farbstoff enthaltender Masterbatch, der für eine vorteilhafte Durchfärbung des zu compoundierenden Kunststoffmaterials und daraus hergestellter Produkte sorgt.

Beispiele für Füllstoffe sind Carbonate, Talk, Ruß, Glasfasern, Wollastonit oder eine Mischung dieser Substanzen. Geeignete Glasfasern sind beispielsweise Langglasfasern mit einer Länge von 2 cm. Als Carbonat kommt insbesondere Calciumcarbonat in Betracht, aber auch die Carbonate anderer Erdalkalimetalle, Alkalimetalle oder Metalle eignen sich prinzipiell als Füllstoff.

Der Füllstoff modifiziert oberflächendbildende Eigenschaften des Kunststoffs dahingehend, dass Erzeugnisse, die aus dem Kunststoff hergestellt werden, Oberflächen aufweisen, die wünschenswerte Eigenschaften wie beispielsweise eine hohe Glattheit oder eine gute Kaschierung von Einfallstellen haben.

Es ist jedoch nicht notwendig, dem zu compoundierenden Kunststoff einen Füllstoff zuzusetzen. Durch das beanspruchte Verfahren weisen Produkte, die aus einem entsprechend hergestellten Kunststoff bestehen, bereits ohne Füllstoffe eine vorteilhafte Eigenschaften aufweisende Oberfläche auf. Dies vereinfacht die Herstellung entsprechender Kunststoffe erheblich.

In einer weiteren Variante wird das Verfahren so durchgeführt, dass dem zu compoundierenden Kunststoffmaterial in Schritt d) oder zwischen Schritt d) und Schritt e) erneut ein Vernetzungsmittel zugegeben wird. Dabei kann es sich um dasselbe Vernetzungsmittel handeln, das bereits in Schritt b) eingesetzt wurde (mit oder ohne Beschleuniger). Alternativ kann ein anderes Vernetzungsmittel (mit oder ohne Beschleuniger) zugegeben werden. Auch kann die Menge des erneut zugegebenen Vernetzungsmittels kleiner, gleich oder größer gegenüber der in Schritt b) zugegebenen Menge sein. Grundsätzlich ist es jedoch nicht notwendig, neues Vernetzungsmittel zuzugeben. Vielmehr kann die Menge des in Schritt b) zugefügten Vernetzungsmittels bereits so bemessen sein, dass sie sowohl für die Vernetzung des ethylenischen Polymers als auch für die nachfolgende Vernetzung des propylenischen Polymers ausreichend ist.

In einer Variante wird das Verfahren in einer Extrusionsvorrichtung durchgeführt. Dies ermöglicht auf besonders einfache Weise das Einstellen verschiedener Temperaturen, die zur Unterstützung und/oder Durchführung und/oder Auslösung der Vernetzung vorteilhaft sind. Auch lassen sich in einer Extrusionsvorrichtung die verschiedenen zu vernetzenden Substanzen auf besonders einfache Weise mischen.

Die der Erfindung zugrunde liegende Aufgabe wird auch durch ein Kunststoffmaterial gelöst, das nach einem Verfahren gemäß den vorherigen Erläuterungen herstellbar, insbesondere hergestellt, ist, wobei zur Herstellung ca. 37 bis 40 % mindestens eines ethylenischen Polymers, ca. 56 bis 59 % mindestens eines propylenischen Polymers, ca. 0,1 bis 0,3 % eines Vernetzungsmittels und ca. 0,7 bis 6,9 % mindestens eines Additivs eingesetzt werden. Es ist für den Fachmann offensichtlich, dass die vorgenannten Substanzen jeweils in einer solchen Menge eingesetzt werden, dass die Summe der zur Herstellung des Kunststoffmaterials verwendeten Substanzen 100 % ergibt. In einer Variante werden keine weiteren als die vorgenannten Substanzen zur Herstellung des Kunststoffs eingesetzt. In einer weiteren Variante wird als ethylenisches Polymer kein EPDM, sondern lediglich ein Copolymer aus Ethylen und einem weiteren Alken eingesetzt. Dabei wird hinsichtlich bevorzugter alternativer Ausgestaltungen auch auf die obigen Ausführungen zum Verfahren verwiesen, die für das Kunststoffmaterial in gleicher Weise gelten.

Für ein vorteilhaftes Aufreißverhalten bei hohen und niedrigen Temperaturen einer aus dem Kunststoffmaterial hergestellten Airbagabdeckung weist das Kunststoffmaterial in einer Variante einen Elastizitätsmodul, gemessen nach ISO 527, von ca. 400 bis 550 MPa auf.

In einer weiteren Variante weist das Kunststoffmaterial eine Zugfestigkeit beim Bruch, gemessen nach ISO 527-1, von 12,5 bis 14,0 MPa auf.

In einer alternativen Ausgestaltung weist das Kunststoffmaterial eine Bruchdehnung bzw. Reißdehnung, gemessen nach ISO 527-2, von 400 bis 750 % auf.

In einer weiteren Ausgestaltung weist das Kunststoffmaterial eine Shore-Härte D, gemessen nach ASTM D 2240, von 40 bis 50 auf.

In einer alternative weist das Kunststoffmaterial eine Schmelze-Massenfließrate bei einer Masse von 5 kg und einer Temperatur von 230 °C, gemessen nach ISO 1133, von 10 bis 35 g/10min auf.

Die vorgenannten Parameter beeinflussen die Eigenschaften eines Erzeugnisses, insbesondere die einer Airbagabdeckung, aus dem Kunststoffmaterial derart, dass das Erzeugnis sowohl bei niedrigen Temperaturen als auch bei hohen Temperaturen vorteilhafte Aufreißeigenschaften aufweist und sich das Kunststoffmaterial folglich zur Herstellung von Airbagabdeckungen eignet.

Die Aufgabe wird ferner durch ein Kunststofferzeugnis gelöst, das ein Kunststoffmaterial entsprechend den oben erläuterten Spezifikationen aufweist, insbesondere aus einem derartigen Kunststoffmaterial besteht. Bei diesem Kunststofferzeugnis kann es sich beispielsweise um ein Erzeugnis handeln, das im Kraftfahrzeugbereich eingesetzt wird. Dabei kann das Kunststofferzeugnis so ausgestaltet sein, dass es eine Sollbruchstelle aufweist, entlang derer es aufreißen kann, wenn ein unterhalb des Kunststofferzeugnisses liegendes Element freigegeben werden soll. Beispielsweise kann das Kunststofferzeugnis eine Airbagkappe oder Airbagabdeckung sein.

Weitere Einzelheiten der Erfindung werden anhand einer Figur und anhand von Beispielen näher erläutert. Es zeigt:

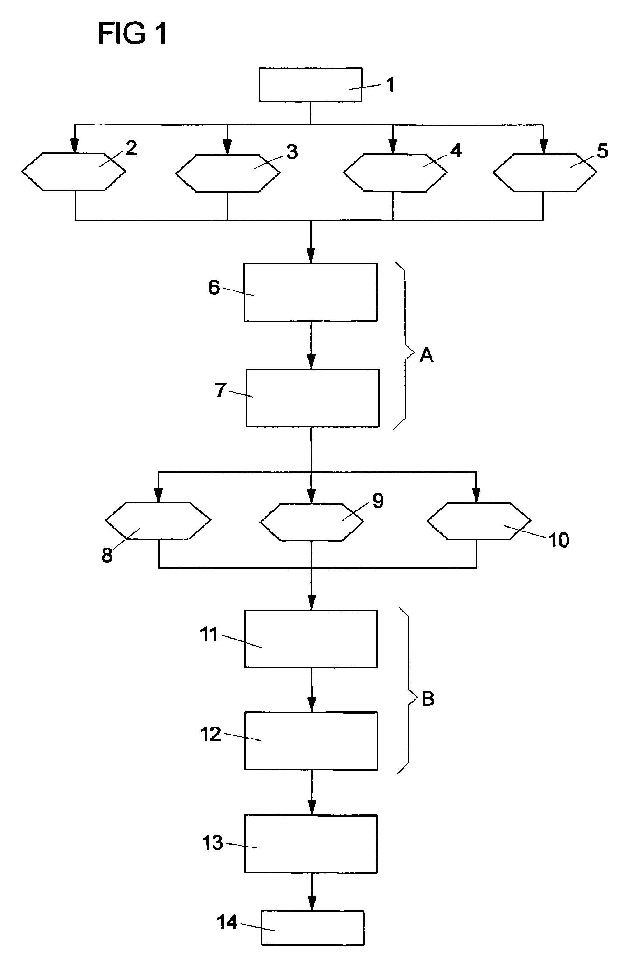

- Fig. 1: ein Flussdiagramm eines Ausführungsbeispiels eines Verfahrens zur Compoundierung eines Kunststoffmaterials.

In der Figur 1 ist ein Flussdiagramm eines Ausführungsbeispiels eines Verfahrens zur Compoundierung eines Kunststoffmaterials dargestellt, das in einem Extruder als Extrusionsvorrichtung durchgeführt wird. Zum Start 1 des Verfahrens wird ein Elastomer 2 als ethylenisches Polymer zusammen mit Additiven 3, einem Vernetzer 4 und einem Beschleunigungsmittel 5 in einen Compounder eingefüllt und dort gemischt. Die entstehende Mischung wird erwärmt, so dass es unter Temperatureinfluss zum Vernetzen des Elastomers 2 kommt. Der Vernetzer 4 und das Beschleunigungsmittel 5 bilden dabei zusammen ein Vernetzungsmittel, dessen Reaktivität durch die erhöhte Temperatur gesteigert wird.

Das Mischen 6 im Compounder sowie das nachfolgende Vernetzen 7 des Elastomers bilden die erste Vernetzungsstufe A des Verfahrens.

Anschließend werden in die das vernetzte Elastomer 2 enthaltende Mischung ein Polypropylen 8 als propylenisches Polymer, Additive 9 und ein Modifikator 10 zur Anpassung der Eigenschaften des zu compoundierenden Kunststoffmaterials gegeben. Nach erneutem Mischen 11 im Compounder erfolgt eine Vernetzung 12 des Polypropylens 8 unter Temperatureinfluss. Bei dieser Vernetzung 12 wird das Polypropylen sowohl in sich als auch mit dem bereits in der ersten Vernetzungsstufe A vorvernetzten Elastomer 2 vernetzt. Das erneute Mischen 11 und die Vernetzung 12 des Polypropylens bilden die zweite Vernetzungsstufe B des Verfahrens.

Nach abgeschlossenem Vernetzen 12 des Polypropylens 8 erfolgt ein Granulieren 13 des compoundierten Kunststoffmaterials, woraufhin sich das Ende 14 des Verfahrens anschließt.

Mit diesem Verfahren können verschiedene Kunststoffmaterialien, die jeweils vorteilhafte Eigenschaften aufweisen, hergestellt werden. Einige derartige Kunststoffmaterialien sind als Ausführungsbeispiele in den nachfolgenden Tabellen hinsichtlich ihrer Zusammensetzung und ihrer physikalischen Eigenschaften näher dargestellt. Dabei beziehen sich die Prozentangaben der Tabelle 1 jeweils auf die Herstellungszusammensetzung, mittels derer die verschiedenen Kunststoffmaterialien hergestellt wurden. Im fertig produzierten Kunststoff liegt eine geringfügig abweichende Zusammensetzung vor, da beispielsweise kein oder kaum noch Vernetzer enthalten ist (dieser wurde während der Vernetzungsreaktion chemisch abgebaut).

Die Kunststoffmaterialien sämtlicher nachfolgender Beispiele wurden in einem gleichläufig zweigängigen Berstorff-Schneckenextruder mit einem Durchmesser von 92 mm und einem Länge/Durchmesser-Verhältnis (L/D) von 36 durchgeführt. Dabei sind die einzelnen beheizbaren Zonen dieses Extruders (Zone 1 bis Zone 9) gleichmäßig über die Länge des Extruders verteilt.

**Tabelle 1: Zusammensetzung der für die Herstellung der Kunststoffmaterialien der Beispiele 1 bis 6 eingesetzten Substanzmischungen. Angaben in Massenprozent. PP - Polypropylen. PE - Polyethylen.**

| **Beispiel** | **1** | **2** | **3** | **4** | **5** | **6** |
|---|---|---|---|---|---|---|
| PP-Copolymer 1 | 17,9 | 17,65 | | 23 | 23 | 23 |
| PP-Copolymer 2 | 40 | 40 | 57,6 | 34,4 | 34,9 | 34,4 |
| Phenolisches Antioxidationsmittel | 0,1 | 0,1 | 0,1 | 0,1 | 0,1 | 0,1 |
| schwarz gefärbter PE-Masterbatch | 2 | 2 | 2 | 2 | 2 | 2 |
| Entformungsmittel 1 | 1,1 | 1,3 | | | | 1 |
| Epoxidharz | 0,25 | 0,25 | 0,2 | 0,2 | 0,2 | 0,2 |
| PP-Homopolymer | | | 0,5 | 0,7 | 0,55 | 0,55 |
| Copolymer aus Ethylen und Octen | 38 | 38 | 39 | 39 | 38 | 38 |
| Peroxid in PP-Basisharz (aktiver Peroxid-Gehalt: 9-10 %) | 0,1 | 0,1 | 0,1 | 0,1 | 0,15 | 0,15 |
| Beschleuniger (70 %iges Triallylcyanurat) | 0,05 | 0,1 | 0,1 | 0,1 | 0,05 | 0,05 |
| PP-Homopolymer | 0,5 | 0,5 | | | 0,95 | 0,55 |
| Antistatikum, enthaltend Glycerolmonostearat | | | 0,3 | 0,3 | 0,1 | |
| Entformungsmittel 2 | | | 0,1 | 0,1 | | |
| **Gesamt** | **100** | **100** | **100** | **100** | **100** | **100** |

Das PP-Copolymer 1 ist ein Polypropylen mit einer Massenfließrate von rund 1,3 g/10 min (gemessen bei 230 °C und einer Masse von 2,16 kg gemäß ISO 1133), einer Zugfestigkeit beim Bruch von 29 MPa (gemessen nach ISO 527-2), einer Streckdehnung von 6 % (gemessen nach ISO 527-2), einem Zugmodul von 1500 MPa (gemessen nach ISO 527-2), einem Elastizitätsmodul von 1400 MPa (gemessen nach ISO 178), einer Kerbschlagzähigkeit von mehr als 50 bei 23 °C und von 9 bei -20 °C (jeweils gemessen nach ISO 180), einer Rockwell-Härte von 82 auf der R-Skala (gemessen nach ISO 2039-2), einem Schmelzpunkt von 165 °C (gemessen nach ISO 3146), einer Dichte von 0,905 g/cm³ und einer Schüttdichte von 0,525 g/cm³ (jeweils gemessen nach ISO 1183).

Das PP-Copolymer 2 ist ein Polypropylen mit einer Massenfließrate von rund 15 g/10 min (gemessen bei 230 °C und einer Masse von 2,16 kg gemäß ISO 1133), einer Zugfestigkeit beim Bruch von 24 MPa (gemessen nach ISO 527-2), einer Streckdehnung von 6 % (gemessen nach ISO 527-2), einem Zugmodul von 1050 MPa (gemessen nach ISO 527-2), einem Elastizitätsmodul von 950 MPa (gemessen nach ISO 178), einer Kerbschlagzähigkeit von mehr als 50 bei 23 °C und von 8 bei -20 °C (jeweils gemessen nach ISO 180), einer Rockwell-Härte von 78 auf der R-Skala (gemessen nach ISO 2039-2), einem Schmelzpunkt von 165 °C (gemessen nach ISO 3146), einer Dichte von 0,905 g/cm³ und einer Schüttdichte von 0,525 g/cm³ (jeweils gemessen nach ISO 1183).

Das Copolymer aus Ethylen und Octen weist eine Massenfließrate von rund 10 g/10 min (gemessen bei 190 °C und einer Masse von 2,16 kg gemäß ASTM D 1238), eine Zugfestigkeit beim Bruch von 3 MPa (gemessen nach ASTM D 638), eine Bruchdehnung von 1220 % (gemessen nach ASTM D 638), einen Elastizitätsmodul von 4,5 MPa (bei 1 % Sekante, gemessen nach ASTM D 638), eine Shore-Härte D von 11 (gemessen nach ASTM 2240) und eine Dichte von 0,857 g/cm³ (gemessen nach ASTM D 792) auf.

Das Entformungsmittel 1 ist ein Siloxan-basiertes Entformungsmittel, das aus 50 % Wirkstoff auf 50 % Trägermaterial besteht. Das Entformungsmittel 2 ist ein nicht-Siloxan-basiertes Entformungsmittel. Beide Entformungsmittel dienen dazu, eine gute Ablösung des compoundierten Kunststoffmaterials vom Extruder und anderen Oberflächen bei weiterer Verarbeitung zu ermöglichen. Sie haben auf die sonstigen Eigenschaften des Kunststoffmaterials keinen wesentlichen Einfluss.

Die in einem Anteil von weniger als jeweils 1 % zugegebenen Polypropylen-Homopolymere dienen als Trägermaterial zur besseren Dosierung von Additiven, die der Mischung in einer Menge von weniger als 2 % zugesetzt werden. Auf die Eigenschaften des Kunststoffmaterials haben sie aufgrund der geringen eingesetzten Menge keinen wesentlichen Einfluss.

Die Tabelle 2 gibt die Prozessparameter während der Kunststoffcompoundierung wieder.

**Tabelle 2: Prozessparameter im Extruder.**

| **Beispiel** | **1** | **2** | **3** | **4** | **5** | **6** |
|---|---|---|---|---|---|---|
| Ausstoß in kg/h | 900 | 500 | 900 | 900 | 900 | 900 |
| Temperatur Zone 1 in °C | 25 | 25 | 25 | 25 | 25 | 25 |
| Temperatur Zone 2 in °C | 150 | 150 | 150 | 150 | 150 | 150 |
| Temperatur Zone 3 in °C | 200 | 200 | 200 | 200 | 200 | 200 |
| Temperatur Zone 4 in °C | 200 | 200 | 200 | 200 | 200 | 200 |
| Temperatur Zone 5 in °C | 200 | 200 | 200 | 200 | 200 | 200 |
| Temperatur Zone 6 in °C | 200 | 200 | 200 | 200 | 199 | 199 |
| Temperatur Zone 7 in °C | 200 | 200 | 205 | 200 | 198 | 198 |
| Temperatur Zone 9 in °C | 205 | 205 | 210 | 205 | 202 | 202 |
| Temperatur Siebwechsler in °C | 200 | 200 | 200 | 200 | 195 | 195 |
| Temperatur Lochplatte in °C | 280 | 280 | 65 | 280 | 280 | 280 |
| Massedruck Siebwechsler in bar | 74 | 74 | 64 | 74 | 74 | 74 |
| Massedruck Lochplatte in bar | 30 | 30 | 380 | 30 | 30 | 30 |
| Umdrehungen pro Minute | 380 | 380 | 40 | 380 | 379 | 379 |
| Drehmoment in % | 60 | 60 | 0,95 | 60 | 40 | 40 |
| Druck in bar | 0,7 | 0,7 | 0,95 | 0,7 | 0,7 | 0,7 |
| Massetemperatur in °C | 217 | 217 | 215 | 217 | 215 | 215 |

Die physikalischen Eigenschaften der Kunststoffmaterialien sowie Ergebnisse von Oberflächen-, Lackierungs- und Aufreißtests von aus diesen Kunststoffmaterialien hergestellten Erzeugnissen sind in der Tabelle 3 dargestellt. Die Kunststoffmaterialien der Beispiele 1 bis 6 eignen sich sämtlich zur Herstellung von Airbagkappen, da sie hervorragende Oberflächen- und Lackierungseigenschaften aufweisen sowie sowohl bei +85 °C als auch bei -35 °C ein sehr gutes Aufreißverhalten zeigen. Dies wird insbesondere durch die zweistufige Vernetzung der Kunststoffkomponenten erreicht.

**Tabelle 3: Eigenschaften der compoundierten Kunststoffmaterialien.**

| **Beispiel** | **1** | **2** | **3** | **4** | **5** | **6** |
|---|---|---|---|---|---|---|
| E-Modul (Zug) in MPa (nach ISO 527) | 494 | 466 | 416 | 527 | 514 | 515 |
| Zugfestigkeit in MPa (nach ISO 527-1) | 13,2 | 12,6 | 13,5 | 12,6 | 13,6 | 13,5 |
| Reißdehnung in % (nach ISO 527-2) | 505 | 495 | 741 | 410 | 487 | 478 |
| Shore-Härte D (nach ASTM D 2240) | 47 | 45 | 42 | 44 | 44 | 44 |
| Schmelze-Massenfließrate (230 °C, 5,0 kg, nach ISO 1133) | 16 | 13 | 30 | 17 | 18 | 17 |
| Dichte in g/cm³ (nach ISO 1183-1-A) | 0,9 | 0,9 | 0,9 | 0,9 | 0,88 | 0,88 |
| Lackierung | ok | ok | ok | ok | ok | ok |
| Oberfläche | ok | ok | ok | ok | ok | ok |
| Aufreißverhalten bei -35 °C | ok | ok | ok | ok | ok | ok |
| Aufreißverhalten bei +85 °C | ok | ok | ok | ok | ok | ok |

## Patentansprüche

1. Verfahren zur Compoundierung eines Kunststoffmaterials, **gekennzeichnet durch** die folgenden Schritte:
a) Bereitstellen mindestens eines ethylenischen Polymers (2),
b) Zugabe mindestens eines Vernetzungsmittels (4, 5) zu dem ethylenischen Polymer (2),
c) zumindest teilweises Vernetzen (7) des ethylenischen Polymers (2) mittels des Vernetzungsmittels (4, 5),
d) Zugabe mindestens eines propylenischen Polymers (8) zu dem in Schritt c) erhaltenen Produkt und
e) zumindest teilweises Vernetzen (12) des propylenischen Polymers (8) mit dem in Schritt c) erhaltenen Produkt.

2. Verfahren nach Anspruch 1, **dadurch gekennzeichnet, dass** als ethylenisches Polymer (2) ein Polymer verwendet wird, das ausgewählt ist aus der Gruppe umfassend Ethylen-Propylen-Dien-Kautschuke und Copolymere aus Ethen und einem weiteren Alken.

3. Verfahren nach Anspruch 1 oder 2, **dadurch gekennzeichnet, dass** als propylenisches Polymer (8) ein Copolymer aus Propen und einem weiteren Alken verwendet wird.

4. Verfahren nach einem der vorhergehenden Ansprüche, **dadurch gekennzeichnet, dass** das Vernetzungsmittel (4, 5) ein Peroxid aufweist.

5. Verfahren nach Anspruch 4, **dadurch gekennzeichnet, dass** das Peroxid in einem Polypropylen-Basisharz eingebettet ist.

6. Verfahren nach einem der vorhergehenden Ansprüche, **dadurch gekennzeichnet, dass** das Vernetzungsmittel (4, 5) einen Beschleuniger (5) aufweist, der zur beschleunigten Freisetzung einer zur Polymerisation reaktiven Spezies aus dem Vernetzungsmittel (4, 5) dient.

7. Verfahren nach einem der vorhergehenden Ansprüche, **dadurch gekennzeichnet, dass** dem zu compoundierenden Kunststoffmaterial in Schritt b) und/oder d) mindestens ein Additiv (3, 9) zugesetzt wird, das ausgewählt ist aus der Gruppe umfassend Antistatika, Antioxidantien, Polyethylen-Masterbatches und Füllstoffe.

8. Verfahren nach einem der vorhergehenden Ansprüche, **dadurch gekennzeichnet, dass** dem zu compoundierenden Kunststoffmaterial in Schritt d) oder zwischen Schritt d) und Schritt e) erneut ein Vernetzungsmittel zugegeben wird.

9. Kunststoffmaterial, herstellbar nach einem Verfahren gemäß einem der vorhergehenden Ansprüche, unter Verwendung
• eines Anteils von 37 bis 40 % mindestens eines ethylenischen Polymers (2),
• eines Anteils von 56 bis 59 % mindestens eines propylenischen Polymers (8),
• eines Anteils von 0,1 bis 0,3 % eines Vernetzungsmittels (4, 5) und
• eines Anteils von 0,7 bis 6,9 % mindestens eines Additivs (3, 9).

10. Kunststoffmaterial nach Anspruch 9, **dadurch gekennzeichnet, dass** es einen Elastizitätsmodul, gemessen nach ISO 527, von 400 bis 550 MPa aufweist.

11. Kunststoffmaterial nach Anspruch 9 oder 10, **dadurch gekennzeichnet, dass** es eine Zugfestigkeit beim Bruch, gemessen nach ISO 527-1, von 12,5 bis 14,0 MPa aufweist.

12. Kunststoffmaterial nach einem der Ansprüche 9 bis 11, **dadurch gekennzeichnet, dass** es eine Bruchdehnung, gemessen nach ISO 527-2, von 400 bis 750 % aufweist.

13. Kunststoffmaterial nach einem der Ansprüche 9 bis 12, **dadurch gekennzeichnet, dass** es eine Shore-Härte D, gemessen nach ASTM D 2240, von 40 bis 50 aufweist.

14. Kunststoffmaterial nach einem der Ansprüche 9 bis 13, **dadurch gekennzeichnet, dass** es eine Schmelze-Massenfließrate bei einer Masse von 5 kg und einer Temperatur von 230 °C, gemessen nach ISO 1133, von 10 bis 35 g/10min aufweist.

15. Kunststofferzeugnis, **dadurch gekennzeichnet, dass** es aus einem Kunststoffmaterial nach einem der Ansprüche 9 bis 14 hergestellt ist.

## Claims

1. Method for compounding a plastic material, **characterized by** the following steps:
a) providing at least one ethylenic polymer (2),
b) addition of at least one cross-linking agent (4, 5) to the ethylenic polymer (2),
c) at least partial cross-linking (7) of the ethylenic polymer (2) by the cross-linking agent (4, 5),
d) addition of at least one propylenic polymer (8) to the product obtained in step c), and
e) at least partial cross-linking (12) of the propylenic polymer (8) with the product obtained in step c).

2. Method according to claim 1, **characterized in that** a polymer chosen from the group comprising ethylene-propylene-diene rubbers and copolymers of ethene and a further alkene is used as ethylenic polymer (2).

3. Method according to claim 1 or 2, **characterized in that** a copolymer of propene and a further alkene is used as propylenic polymer (8).

4. Method according to any of the preceding claims, **characterized in that** the cross-linking agent (4, 5) comprises a peroxide.

5. Method according to claim 4, **characterized in that** the peroxide is embedded in a polypropylene base resin.

6. Method according to any of the preceding claims, **characterized in that** the cross-linking agent (4, 5) comprises an accelerator (5) which serves for an accelerated release of a species reactive for polymerization from the cross-linking agent (4, 5).

7. Method according to any of the preceding claims, **characterized in that** at least one additive (3, 9) is added to the plastic material to be compounded in step b) and/or d), the additive (3, 9) being chosen from the group comprising antistatic agents, antioxidants, polyethylene masterbatches and filler materials.

8. Method according to any of the preceding claims, **characterized in that** a cross-linking agent is once again added to the plastic material to be compounded in step d) or between step d) and step e).

9. Plastic material, producible by a method according to any of the preceding claims by using
• a proportion of from 37 to 40 % of at least one ethylenic polymer (2),
• a proportion of from 56 to 59 % of at least one propylenic polymer (8),
• a proportion of from 0.1 to 0.3 % of a cross-linking agent (4, 5), and
• a proportion of from 0.7 to 6.9 % of at least one additive (3, 9).

10. Plastic material according to claim 9, **characterized in that** it has an elasticity modulus, measured according to ISO 527, of from 400 to 550 MPa.

11. Plastic material according to claim 9 or 10, **characterized in that** it has a tensile stress at break, measured according to ISO 527-1, of from 12.5 to 14.0 MPa.

12. Plastic material according to any of claims 9 to 11, **characterized in that** it has a tensile strain at break, measured according to ISO 527-2, of from 400 to 750 %.

13. Plastic material according to any of claims 9 to 12, **characterized in that** it has a Shore D hardness, measured according to ASTM D 2240, of from 40 to 50.

14. Plastic material according to any of claims 9 to 13, **characterized in that** it has a melt flow index at a mass of 5 kg and a temperature of 230 °C, measured according to ISO1133, of from 10 to 35 g/10 min.

15. Plastic product, **characterized in that** it is made from a plastic material according to any of claims 9 to 14.

## Revendications

1. Procédé pour le compoundage d'une matière plastique **caractérisé par** les étapes suivantes :
a) fourniture d'au moins un polymère éthylénique (2),
b) addition d'au moins un réticulant (4, 5) au polymère éthylénique (2),
c) réticulation au moins partielle (7) du polymère éthylénique (2) au moyen du réticulant (4, 5),
d) addition d'au moins un polymère propylénique (8) au produit obtenu dans l'étape c) et
e) réticulation au moins partielle (12) du polymère propylénique (8) avec le produit obtenu dans l'étape c).

2. Procédé selon la revendication 1 **caractérisé en ce qu'**un polymère qui est choisi dans le groupe comprenant les caoutchoucs éthylène-propylène-diène et les copolymères d'éthène et d'un autre alcène est utilisé comme polymère éthylénique (2).

3. Procédé selon la revendication 1 ou 2 **caractérisé en ce qu'**un copolymère de propène et d'un autre alcène est utilisé comme polymère propylénique (8).

4. Procédé selon l'une des revendications précédentes **caractérisé en ce que** le réticulant (4, 5) présente un peroxyde.

5. Procédé selon la revendication 4 **caractérisé en ce que** le peroxyde est inclus dans une résine à base de polypropylène.

6. Procédé selon l'une des revendications précédentes **caractérisé en ce que** le réticulant (4, 5) présente un accélérateur (5) qui sert à la libération accélérée d'une espèce réactive pour la polymérisation à partir du réticulant (4, 5).

7. Procédé selon l'une des revendications précédentes **caractérisé en ce qu'**au moins un additif (3, 9) qui est choisi dans le groupe comprenant les antistatiques, les antioxydants, les mélanges-maîtres de polyéthylène et les charges est ajouté à la matière plastique destinée à être compoundée dans l'étape b) et/ou d).

8. Procédé selon l'une des revendications précédentes **caractérisé en ce qu'**un réticulant est ajouté de nouveau à la matière plastique destinée à être compoundée dans l'étape d) ou entre l'étape d) et l'étape e).

9. Matière plastique pouvant être produite selon un procédé selon l'une des revendications précédentes, en utilisant
• une fraction de 37 à 40 % d'au moins un polymère éthylénique (2),
• une fraction de 56 à 59 % d'au moins un polymère propylénique (8),
• une fraction de 0,1 à 0,3 % d'un réticulant (4,5) et
• une fraction de 0,7 à 6,9 % d'au moins un additif (3, 9).

10. Matière plastique selon la revendication 9 **caractérisée en ce qu'**elle présente un module d'élasticité, mesuré selon ISO 527, de 400 à 550 MPa.

11. Matière plastique selon la revendication 9 ou 10 **caractérisée en ce qu'**elle présente une résistance à la rupture, mesurée selon ISO 527-1, de 12,5 à 14,0 MPa.

12. Matière plastique selon l'une des revendications 9 à 11 **caractérisée en ce qu'**elle présente un allongement à la rupture, mesuré selon ISO 527-2, de 400 à 750 %.

13. Matière plastique selon l'une des revendications 9 à 12 **caractérisée en ce qu'**elle présente une dureté Shore D, mesurée selon ASTM D 2240, de 40 à 50.

14. Matière plastique selon l'une des revendications 9 à 13 **caractérisée en ce qu'**elle présente un indice de fluidité à chaud en masse pour une masse de 5 kg et une température de 230°C, mesuré selon ISO 1133, de 10 à 35 g/10 min.

15. Produit en matière plastique **caractérisé en ce qu'**il est produit à partir d'une matière plastique selon l'une des revendications 9 à 14.
